Europäisches Patentamt

European Patent Office

Office européen des brevets

(11) Veröffentlichungsnummer: **0 281 938 B1**

## (12) EUROPÄISCHE PATENTSCHRIFT

(45) Veröffentlichungstag der Patentschrift:
28.08.91 Patentblatt 91/35

(21) Anmeldenummer: 88103256.9

(22) Anmeldetag: 03.03.88

(51) Int. Cl.⁵: **G01N 31/22, G01N 31/12**

(54) Vorrichtung zur Wärmebehandlung von gasförmigen Messproben.

(30) Priorität: 12.03.87 DE 3707943

(43) Veröffentlichungstag der Anmeldung:
14.09.88 Patentblatt 88/37

(45) Bekanntmachung des Hinweises auf die
Patenterteilung:
28.08.91 Patentblatt 91/35

(84) Benannte Vertragsstaaten:
DE FR GB IT NL

(56) Entgegenhaltungen:
DE-A- 2 135 203

(56) Entgegenhaltungen:
DE-A- 2 851 821
DE-A- 3 012 381
DE-B- 2 706 992
DE-B- 2 932 268

(73) Patentinhaber: **Drägerwerk
Aktiengesellschaft
Moislinger Allee 53-55
W-2400 Lübeck 1 (DE)**

(72) Erfinder: **Heckmann, Johannes
Gothmunderweg 32
W-2400 Lübeck (DE)**
Erfinder: **Bäther, Wolfgang, Dr. Dipl.-Chem.
Schaluppenweg 4
W-2400 Lübeck (DE)**

## Beschreibung

Die Erfindung betrifft eine Wärmebehandlungsvorrichtung zur Umwandlung von gasförmigen Meßproben in von einer Nachweisvorrichtung erfaßbare Bestandteile.

Die zu untersuchenden Meßproben, häufig aus der Umgebungsluft genommen, können dabei nachzuweisende Schadstoffe enthalten ; es kann sich aber auch gelegentlich um erwünschte Stoffe, wie sie beispielsweise bei chemischen Prozessen anfallen, handeln. Im folgenden soll jedoch der Einfachheit halber immer auf Schadstoffe Bezug genommen werden.

Schadstoffe in der Umgebungsluft können auf verschiedene Art nachgewiesen werden. Dabei ist ein solches Nachweisgerät erforderlich, welches spezifisch auf die zu untersuchenden Schadstoffe anspricht. In vielen Fällen ist es jedoch nicht möglich, ein entsprechend empfindliches Nachweisgerät zu schaffen, oder die vorhandenen Nachweisgeräte sind nicht nur auf einen bestimmten Schadstoff, sondern auch auf mehrere, ebenfalls in der zu untersuchenden Umgebungsluft anwesende Komponenten empfindlich.

Diese sogenannte Querempfindlichkeit erschwert ein sicheres Beurteilen der tatsächlichen Schadstoffmenge. Man ist daher bemüht, die Selektivität einer Schadstoffmessung beispielsweise dadurch zu erhöhen, daß man den nachzuweisenden Schadstoff in solche Komponenten zerlegt, auf die das nachgeschaltete Nachweisgerät spezifisch und ohne Querempfindlichkeit reagiert. Eine solche Möglichkeit besteht darin, den Schadstoff einer Wärmebehandlung zu unterziehen (Pyrolyse), durch die der Schadstoff in die unterschiedlichsten Pyrolysestoffe verwandelt wird, von denen einer durch die Nachweisvorrichtung erfaßt wird.

In der DE-OS 2135203 ist eine derartige Vorrichtung angegeben, mit welcher eine zu untersuchende Meßprobe einer Pyrolyse unterzogen wird.

Dazu wird die zu untersuchende Probe über einen mit einem Adsorptionsmittel versehenen Sammler geleitet, in welchem sich der nachzuweisende Schadstoff anreichert. Nach der Probenahme wird der Sammler in ein separates Analysegerät eingebracht. Dieses Gerät besitzt einen Pyrolyse-Ofen, in welchem der Sammler aufgeheizt wird, wobei der in ihm enthaltene Schadstoff ausgetrieben, pyrolytisch zerlegt und ein freiwerdendes Pyrolyseprodukt von einem nachgeschalteten Meßgerät untersucht wird.

Die bekannte Vorrichtung wird zur Bestimmung des Atemalkoholgehaltes eingesetzt, so daß als ein typisches Pyrolyseprodukt Wasserstoff entsteht, welcher über ein wasserstoffdurchlässiges Filter, wie z. B. Palladium, einem Wasserstoffmeßgerät, wie z. B. einer Ionisationskammer, zugeführt und von diesem nachgewiesen wird. Somit ist die gemessene Wasserstoffkonzentration ein Maß für den in der Probenmenge vorhandenen Atemalkohol.

Die bekannte Vorrichtung weist den Nachteil auf, daß zunächst die zu untersuchende Luftmenge gesammelt und anschließend einer Pyrolyse unterzogen werden muß. Für die Probenahme und die Pyrolyse müssen verschiedene Geräte eingesetzt werden, die eine komplizierte Handhabung erfordern und zudem einen hohen Energieverbrauch für den Pyrolyseofen sowie eine aufwendige Meßschaltung für das Nachweisgerät benötigen. Der Bedarf von elektrischer Energie sowohl für die Pyrolyse wie für das Meßgerät macht abhängig von Versorgungsnetzen oder schweren, sperrigen Elementen oder Speichern. Dadurch ist es nicht möglich, ein vollständiges Nachweissystem transportabel zu gestalten, welches zum einen leicht an Gewicht und leicht zu bedienen ist und zum anderen möglichst geringe Betriebsenergie benötigt.

Ein Sammeln und eine anschließende Messung der nachweisbaren Pyrolyseprodukte in einem Zuge schon unmittelbar bei der Probenahme ist nicht möglich, sondern es sind immer getrennte Arbeitsgänge mit unterschiedlich langen Zwischenschritten erforderlich. Bei der notwendigen Desorption von dem Adsorptionsmittel kann eine nicht unerhebliche Menge an Schadstoffen in dem Sammler adsorbiert bleiben, wodurch die Ausbeute verringert wird.

Ferner ist es bei der bekannten Vorrichtung nur dann möglich, unterschiedliche Pyrolyseprodukte festzustellen, sofern eine entsprechende durchlässige Membran zwischen Pyrolyseofen und Meßgerät vorgesehen ist.

Der vorliegenden Erfindung liegt somit die Aufgabe zugrunde, bei einer Wärmebehandlungsvorrichtung der genannten Art die Möglichkeit zu schaffen, auch schon während der Probenahme die gewünschten Pyrolyseprodukte zu erhalten, um sie unmittelbar anschließend dem Nachweisgerät zuzuführen. Sie soll eine kleine Bauform haben, leicht mitgeführt und angewendet und unabhängig von einer äußeren Energieversorgung betrieben werden können. Darüber hinaus soll die Wärmebehandlungsvorrichtung an eine Vielzahl von unterschiedlichen Nachweisgeräten anschließbar sein.

Die Lösung der Aufgabe erfolgt dadurch, daß ein vom Prüfgas durchströmbares Behältnis mit einer zu einer exothermen Reaktion fähigen Chemikalfüllung und mit einer die Reaktion einleitenden Startvorrichtung versehen ist.

Die mit der Erfindung erzielten Vorteile liegen im wesentlichen darin, daß nunmehr eine die Pyrolyse oder Thermolyse ermöglichende Wärmebehandlungsvorrichtung in einem Behältnis aufgenommen ist, welches von

2

der Luftprobe durchströmbar ist. Dadurch gewinnt man gegenüber einer separaten, das Behältnis umgebenden und mit einem Chemikal gefüllten Wärmebehandlungsvorrichtung in Form eines Ofens die Vorzüge, daß die Meßprobe unmittelbar nach dem Starten der exothermen Reaktion in ihre Pyrolyseprodukte zerlegt wird. Es braucht nicht längere Zeit gewartet zu werden, bis die Wärmeübertragung von dem Ofen zu der Meßprobe stattgefunden hat. Da im Zuge der Pyrolyse eine Vielzahl von Pyrolyseprodukten entstehen können, kann ein nachfolgender Nachweis dieser Produkte durch dafür geeignete Meßgeräte erfolgen.

Wegen der möglichen kleinen Bauform ist eine derartige chemische Wärmebehandlungsvorrichtung nach der Erfindung mit einem dazugehörigen Nachweisgerät unmittelbar zum Ort der Probenahme mitführbar und dort auch einsetzbar. Sie ist leicht in Gang zu setzen, bedarf keiner externen Energiequelle zum Betrieb und ist daher besonders für den Ungeübten einfach anwendbar. Es entfallen auch umständliche Vorbereitungen zum Transport der gesammelten Meßprobe zu einer separaten Pyrolyse- und Nachweisvorrichtung. Man erhält hohe Ausbeuten an Pyrolyseprodukten, da die zu untersuchende Meßprobe während des Durchströmens des gezündeten Chemikals an einer großen Oberfläche pyrolytisch zersetzt wird. Insbesondere bei der Untersuchung niedrigsiedender Substanzen können Probenahme, Pyrolyse und Analyse in einem Zuge erfolgen. Auf eine, in diesem Falle kaum wirksame, vorangehende Probensammlung kann verzichtet werden.

Eine einfache zweckmäßige Ausbildung des Chemikals besteht aus einer Natriummonoxid-Füllung, die zur Einleitung der exothermen Reaktion mit einer geringen Menge von Wasser benetzt zu werden braucht, um während der Durchströmung der Meßprobe die für die Pyrolyse notwendige Wärmemenge zu erzeugen.

Ebenso günstig ist eine Chemikalfüllung, welche aus einem Träger besteht, der mit einer leicht oxidierbaren, flüchtigen Substanz belegt ist, dem eine Katalysatorfüllung zur Umsetzung der Substanz folgt. Bei Einleitung der Meßprobe wird die flüchtige Substanz von ihrem Träger entfernt und dem Katalysator zugeführt, wodurch sie verbrennt, und zwar nur so lange, wie auch die Meßprobe durch die Füllung getrieben wird. Je nach Flüchtigkeit der gewählten Substanz, z. B. entweder Methanol oder Glyzerin, kann eine intensive oder aber längerdauernde milde Erhitzung erzielt werden.

Eine vorteilhafte Anordnung kann darin bestehen, daß Silicagel oder Aluminiumoxid mit Methanol imprägniert ist, oder daß dem Träger eine mit Methanol gefüllte, brechbare Ampulle strömungsaufwärts vorgeschaltet ist, welche zum Initiieren der Reaktion aufgebrochen wird, so daß sich ihr Inhalt über den Träger aus Silicagel oder Aluminiumoxid ergießt und ihre Dämpfe an dem nachgeordneten Katalysator während der Probenahme verbrennen. Die freigesetzte Wärme bringt den Katalysator zum Glühen und macht ihn damit zum pyrolytischen Wärmevermittler und -speicher.

Als geeigneter Katalysator hat sich ein unter dem Namen Hopkalit bekanntes Gemisch von Metalloxiden erwiesen. In günstiger Ausbildung kann als Katalysator eine mit einer Pt/Ir-Imprägnierung versehene Aktivkohlefüllung eingesetzt werden. Sie bietet den Vorteil, daß zum einen der Aktivkohleträger mit verbrannt wird und damit die Pyrolysereaktion fortsetzt, und zum anderen durch die Imprägnierung sowohl der Zündvorgang eingeleitet und unterhalten, als auch die Pyrolyse katalytisch unterstützt wird.

Sollen Schadstoffe geringster Konzentrationen gemessen werden, ist es zweckmäßig, einen Teil der Chemikalfüllung als eine den Schadstoff sammelnde Füllung auszubilden, welche entweder eine eigenständige Füllung oder auch das Chemikal selbst sein kann. Beispielsweise kann eine solche Sammelfüllung die Aktivkohle-Füllung selbst sein. Geeignet sind auch Harze adsorptionsaktiver Hochpolymere. Bei der Probenahme wird dann zunächst die Meßprobe in der Sammelfüllung gesammelt und nach Beendigung der Probenahme das Chemikal gezündet, so daß bei Durchströmung des Chemikals die Sammelfüllung erhitzt und die Pyrolyseprodukte ausgetrieben und einer nachfolgenden Analyse zugeführt werden.

Vorteilhafterweise kann als Chemikalfüllung auch pyrophores Material verwendet werden, welches durch den Luftsauerstoff der eingeleiteten Meßprobe unter erheblicher Wärmeentwicklung verbrennt. Ein bekanntes Beispiel für ein pyrophores Material ist pyrophores Eisen oder auch Gemische aus Bleichromat und Schwefel, Kaliumsulfat und Kohle, oder auch fein verteilter Platinmohr.

Eine erhebliche Verbesserung der pyrolytischen Wirkung wird dadurch erzielt, daß sich in Strömungsrichtung hinter der Chemikalfüllung ein Nachschaltkatalysator befindet. Seine Verwendung zur Umsetzung des nachzuweisenden Stoffes erweist sich inbesondere dann als nützlich, wenn für eine länger andauernde Probenahme die Brenndauer des anfänglich gezündeten Chemikals nicht ausreicht.

Der Nachschaltkatalysator kann auch dazu eingesetzt werden, um eine höhere Verbrennungswärme zu liefern, als es die vorgeschaltete Chemikalfüllung in der Lage ist. Somit können die Pyrolyseprodukte, welche in der Chemikalfüllung entstanden sind, einer weiteren Pyrolyse bei erhöhter Temperatur zugeführt werden, wodurch wiederum Sekundärprodukte entstehen, die u. U. leichter nachweisbar sind als die zuerst entstandenen. Man erhält somit eine Art Kaskadenschaltung von mehreren Wärmebehandlungsvorrichtungen, wobei der Nachschaltkatalysator jeweils von dem voranliegenden Chemikal gezündet wird.

Zweckmäßigerweise besteht der Nachschaltkatalysator aus Aktivkohle, welche mit einer Platin/Iridium-Imprägnierung versehen ist. In diesem Fall würde z. B. bei einer Messung von halogenierten Kohlenwasserstoffen die aus dem Chemikal entstandenen Pyrolyseprodukte in Richtung der Bildung von Chlorverbindungen verschoben, so daß als Nachweisvorrichtung ein chlorempfindliches Meßgerät einsetzbar wird. Gleichzeitig kann der Aktivkohleträger durch die wärmeliefernde Reaktion der vorgeschalteten Chemikalfüllung zum Brennen gebracht werden und nach deren Erlöschen die weitere Wärmeerzeugung übernehmen und die Pyrolyse unterhalten.

Für den Fall eines Nachschaltkatalysators aus Zellulose werden die in der Chemikalfüllung erzeugten Pyrolyseprodukte in Richtung der Bildung von Salzsäureverbindungen verschoben, so daß ein auf Salzsäure empfindliches Nachweisgerät zur Messung einsetzbar ist.

Zweckmäßigerweise wird das Behältnis der Wärmebehandlungsvorrichtung als ein Röhrchen ausgebildet, in dem die Füllungen schichtweise angeordnet sind. Dadurch ist es möglich, ein solches Röhrchen an ein kolorimetrisches Prüfröhrchen anzuschließen, welches auf eine spezifische Art von Pyrolyseprodukten empfindlich ist. Somit erhält man ein mehrschichtiges Prüfröhrchen zum pyrolytischen Nachweis von Schadstoffen, welches leicht handhabbar und universell einsetzbar ist.

Dabei kann das nachgeschaltete Prüfröhrchen entweder einstückig mit der als Vorschaltschicht ausgebildeten Wärmebehandlungsvorrichtung sein, oder beide Röhrchen können getrennt bereitgestellt und bei Bedarf miteinander verbunden werden.

Ein besonderer Vorteil ergibt sich daraus, daß die Wärmebehandlungsvorrichtung einem kolorimetrischen Bandgerät, wie es z. B. aus der DE-OS 3407686 bekannt ist, vorzuschalten. Dadurch kann das kolorimetrische Band mit den spezifisch nachweisbaren Pyrolyseprodukten begast werden.

Ein Ausführungsbeispiel der Erfindung wird anhand der schematischen Zeichnung dargestellt und im folgenden näher erläutert.

Es zeigen :

Fig. 1 die Wärmebehandlungsvorrichtung als Vorröhrchen zu einem Prüfröhrchen,
Fig. 2 eine Ausführungsform des Vorröhrchens mit einer Sammelschicht.

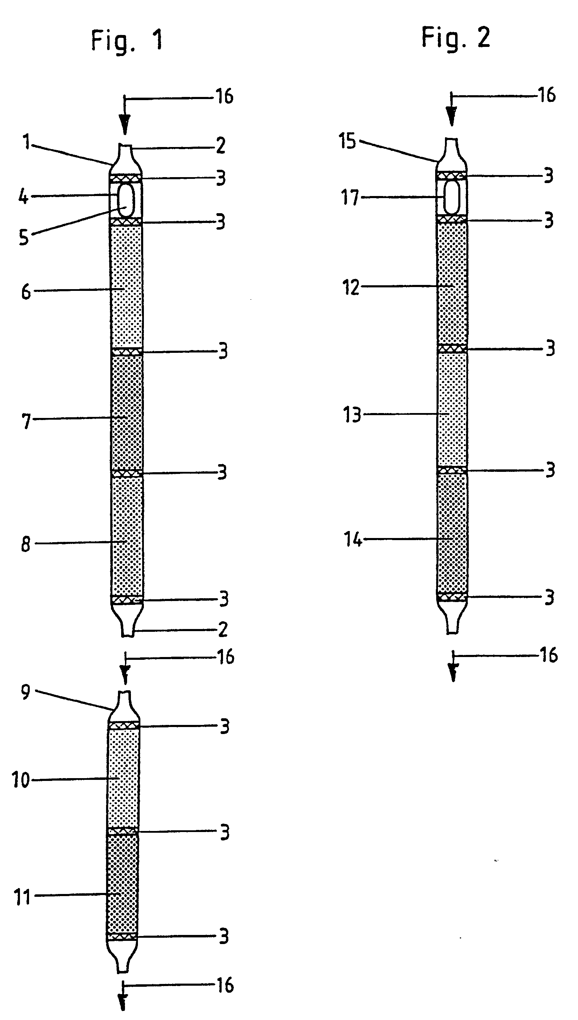

In der Figur 1 ist das Behältnis einer Wärmebehandlungsvorrichtung in Form eines Vorröhrchens (1) zu einem nachgeschalteten Prüfröhrchen (9) dargestellt. Das in Bereitstellung beidseitig geschlossene Vorröhrchen (1) ist an seinen beiden Enden (2) öffenbar. Der Inhalt des Vorröhrchens (1) ist schichtweise aufgebaut, wobei die einzelnen Schichten durch jeweils ein durchlässiges Halteelement (3) voneinander abgeteilt sind. In Durchströmungsrichtung der Meßprobe, die durch die Strömungspfeile (16) angedeutet ist, folgen nacheinander zunächst eine zerbrechbare Ampulle (4), anschließend als Träger eine Silicagel-Füllung (6), danach eine Hopkalit-Füllung (7) als Katalysator und schließlich eine Nachschaltkatalysatorfüllung (8).

Sollen mit dem dargestellten Prüfröhrchen beispielsweise halogenierte Kohlenwasserstoffe nachgewiesen werden, wird die mit Methanol (5) oder Glyzerin gefüllte Ampulle (4) nach Öffnen des Vorröhrchens (1) zerbrochen, wodurch sich deren Inhalt über die Silicagel-Füllung (6) ergießt und diese mit dem Ampulleninhalt getränkt wird. Beim Durchströmen der Meßprobe mit dem nachzuweisenden Gas in Richtung der Strömungspfeile (16) wird die leicht verdunstende Methanol-Imprägnierung über die nachgeschaltete Hopkalitfüllung (7) gezogen und entzündet sich bei diesem Kontakt. Die freigesetzte Wärme bringt die Hopkalit-Füllung (7) auf Rotglut. Während des Glühens der Hopkalit-Füllung (7) wird der nachzuweisende halogenierte Kohlenwasserstoff in verschiedene Bestandteile pyrolytisch zersetzt. Durch das vom glühenden Hopkalit erhitzte Gas wird die nachgeschaltete Katalysatorfüllung (8) gezündet, welche ihrerseits bei einer gegenüber der Verbrennungstemperatur der Hopkalit-Füllung (7) erhöhten Temperatur verbrennt. Die Katalysatorfüllung (8) kann beispielsweise aus Aktivkohle mit einer Platin/Iridium-Imprägnierung bestehen, so daß die gegenüber der Hopkalit-Füllung (7) erhöhte Temperatur der Katalysatorfüllung (8) die Pyrolyse des zu untersuchenden Schadstoffes weiter erhöht und somit eine erhöhte Ausbeute liefert. Gleichzeitig wird durch den Einsatz des Katalysators das Gleichgewicht der Pyrolyseprodukte in eine gewünschte Richtung verschoben.

So wird beispielsweise bei Verwendung eines Aktivkohle-Katalysators mit einer Platin/Iridium-Imprägnierung die Pyrolyse-Reaktion beim Nachweis von chloriertem Kohlenwasserstoff in Richtung einer Chlorbildung, und beim Einsatz von einem reinen Zellulose-Katalysator in Richtung einer Salzsäure-Bildung verschoben. Dementsprechend können für Chlor- bzw. Salzsäure spezifisch empfindliche Nachweisröhrchen nachgeschaltet werden. Ein derartiges Prüfröhrchen (9) ist in Strömungsverbindung zu dem Vorröhrchen (1) dargestellt. Die in dem Vorröhrchen (1) entstandenen Pyrolyseprodukte werden mit dem nachgeschalteten Prüfröhrchen (9) nachgewiesen. Dieses besteht aus einer Vorschicht (10), welche beispielsweise eine Trockenschicht sein kann, und einer Indikatorschicht (11). Für den Fall eines pyrolytischen Nachweises von chlorierten Kohlenwasserstoffen kann das Nachweisröhrchen aus einem Chlor-Röhrchen bestehen, falls als Katalysatorfüllung (8) imprägnierte Aktivkohle gewählt wurde, oder es kann aus einem Salzsäure-Nachweisröhrchen bestehen, wenn als Katalysatorfüllung (8) reine Zellulose gewählt wurde.

Das in Figur 2 dargestellte, an seinen beiden Enden geöffnete Vorröhrchen (15) weist in Richtung der Strömungspfeile (16) zunächst eine Wasserampulle (17) und eine Zündschicht (12), sodann eine Sammelschicht (13) und schließlich eine Katalysatorschicht (14) auf. Alle Schichten (12, 13, 14) sind über durchlässige und temperaturbeständige Halteelemente (3) voneinander abgetrennt.

Die Zündschicht (12) besteht aus Natriummonoxid, welches durch Hinzugabe einer geringen Menge Wasser gezündet werden kann. Die nachfolgende Sammelschicht (13) ist in der Lage, geringste Mengen von nachzuweisendem Schadstoff aufzunehmen und zu speichern, bevor die anschließende Pyrolyse durchgeführt wird. Als Katalysatorschicht (14) können ähnliche Zusammensetzungen gewählt werden, wie sie in dem nach Figur 1 erforderlichen Vorröhrchen (1) verwendet werden.

Zur Durchführung einer Messung wird das Vorröhrchen (15) mit der zu untersuchenden Meßprobe durchströmt, wobei sich der nachzuweisende Schadstoff in der Sammelschicht (13) ansammelt. Nach genügend langer Sammelzeit wird die Zündschicht (12) durch Zerbrechen der Wasserampulle (17) gezündet und die in der Sammelschicht (13) gesammelten Schadstoffe pyrolytisch zersetzt und der nachfolgenden Katalysatorschicht (14) zugeführt. Dabei kann die Sammelschicht (13) je nach Art des zu untersuchenden Prüfgases und des in ihm enthaltenen Schadstoffes aus Aktivkohle oder Hopkalit bestehen. Sie dient dann einmal zur Sammlung des nachzuweisenden Schadstoffes und zum anderen als Katalysatorschicht (14) bei durchzuführender Pyrolyse.

Die entstandenen Pyrolyseprodukte können dann in derselben Weise, wie in Figur 1 dargestellt und dazu beschrieben, einem nachgeschalteten, nicht dargestellten Prüfröhrchen zugeführt und von diesem angezeigt werden.

## Patentansprüche

1. Wärmebehandlungsvorrichtung zur Umwandlung von gasförmigen Meßproben in von einer Nachweisvorrichtung erfaßbare Bestandteile, dadurch gekennzeichnet, daß ein vom Prüfgas durchströmbares Behältnis (1, 15) mit einer zu einer exothermen Reaktion fähigen Chemikalfüllung (5, 7, 8, 12, 14) und mit einer die Reaktion einleitenden Startvorrichtung (2, 4, 17) versehen ist.

2. Wärmebehandlungsvorrichtung nach Anspruch 1, dadurch gekennzeichnet, daß als Chemikal eine Natriummonoxid-Füllung (12) vorgesehen ist, die zur Einleitung der Reaktion mit Wasser (17) benetzbar ist.

3. Wärmebehandlungsvorrichtung nach Anspruch 1, dadurch gekennzeichnet, daß die Chemikalfüllung aus einer leicht oxidierbaren, flüchtigen, auf einem Träger (6) aufgebrachten Substanz und einer strömungsabwärts angeordneten Katalysatorfüllung (7) besteht, die zur Einleitung der Reaktion in Strömungsverbindung zum Substanz-Träger gebracht ist.

4. Wärmebehandlungsvorrichtung nach Anspruch 3, dadurch gekennzeichnet, daß Silicagel als Träger (6) mit Methanol imprägniert ist.

5. Wärmebehandlungsvorrichtung nach Anspruch 4, dadurch gekennzeichnet, daß zur Imprägnierung eine mit Methanol (5) gefüllte, brechbare Ampulle (4) strömungsaufwärts zum Träger (6) vorgesehen ist.

6. Wärmebehandlungsvorrichtung nach einem der Ansprüche 3 bis 5, dadurch gekennzeichnet, daß die Katalysatorfüllung (7) aus Hopkalit besteht.

7. Wärmebehandlungsvorrichtung nach einem der Ansprüche 1 bis 6, dadurch gekennzeichnet, daß ein Teil der Chemikalfüllung (7, 8, 13, 14) als eine das Prüfgas aufnehmende Sammelfüllung (13) ausgebildet ist.

8. Wärmebehandlungsvorrichtung nach Anspruch 1, dadurch gekennzeichnet, daß die Chemikalfüllung aus pyrophorem Material (12) besteht, die zur Einleitung der Reaktion mit der Umgebungsluft über die geöffneten Enden (2) in Strömungsverbindung gebracht ist.

9. Wärmebehandlungsvorrichtung nach Anspruch 1, dadurch gekennzeichnet, daß die Chemikalfüllung aus Platinmohr (12) besteht, die zur Einleitung der Reaktion mit der Umgebungsluft über die geöffneten Enden (2) in Strömungsverbindung gebracht ist.

10. Wärmebehandlungsvorrichtung nach Anspruch 1 bis 9, dadurch gekennzeichnet, daß sich in Strömungsrichtung hinter der Chemikalfüllung (5, 7, 12, 13) eine Nachschaltkatalysatorfüllung (8, 14) befindet.

11. Wärmebehandlungsvorrichtung nach Anspruch 10, dadurch gekennzeichnet, daß der Nachschaltkatalysator (8, 14) aus reiner Aktivkohle oder Zellulose besteht.

12. Wärmebehandlungsvorrichtung nach einem der Ansprüche 3 bis 5 oder 10, dadurch gekennzeichnet, daß der Katalysator (7, 8, 14) aus einem Aktivkohleträger besteht, welcher mit einer Platin/Iridium-Imprägnierung versehen ist.

13. Wärmebehandlungsvorrichtung nach einem der Ansprüche 1 bis 12, dadurch gekennzeichnet, daß das Behältnis (1) als Röhrchen ausgebildet ist, in welchem die Füllungen schichtweise angeordnet sind.

14. Wärmebehandlungsvorrichtung nach einem der Ansprüche 1 bis 13, dadurch gekennzeichnet, daß sie mit einem kolorimetrischen Prüfröhrchen (9) als Nachweisvorrichtung in Wirkverbindung gebracht ist.

15. Wärmbehandlungsvorrichtung nach einem der Ansprüche 1 bis 13, dadurch gekennzeichnet, daß sie mit einem kolorimetrischen Bandgerät als Nachweisvorrichtung in Wirkverbindung gebracht ist.

16. Wärmebehandlungsvorrichtung nach Anspruch 13, dadurch gekennzeichnet, daß die Füllungen als Vorschaltschicht für ein eine Indikatorschicht enthaltendes Prüfröhrchen ausgebildet sind.

## Claims

1. Heat treatment device for the conversion of gaseous test samples into constituents which can be detected by a detection device, characterized in that a container (1, 15) through which test gas can flow is provided with a chemical filling (5, 7, 8, 12, 14) capable of an exothermic reaction and with a starting device (2, 4, 17) which initiates the reaction.

2. Heat treatment device according to claim 1, characterized in that as chemical a sodium monoxide filling (12) is provided, which can be wetted with water (17) for the initiation of the reaction.

3. Heat treatment device according to claim 1, characterized in that the chemical filling consists of a volatile substance, which can be easily oxidized and which is applied to a carrier (6), and a catalyst filling (7) arranged in a downstream manner, which is brought into flow connection with the substance carrier for the initiation of the reaction.

4. Heat treatment device according to claim 3, characterized in that silica gel as carrier (6) is impregnated with methanol.

5. Heat treatment device according to claim 4, characterized in that for the impregnation a breakable ampule (4) filled with methanol (5) is provided upstream of the carrier (6).

6. Heat treatment device according to one of claims 3 to 5, characterized in that the catalyst filling (7) consists of hopcalite.

7. Heat treatment device according to one of claims 1 to 6, characterized in that a portion of the chemical filling (7, 8, 13, 14) is formed as a collecting filling (13) incorporating the test gas.

8. Heat treatment device according to claim 1, characterized in that the chemical filling consists of pyrophoric material (12) which is brought into flow connection with the surrounding air by means of the open ends (2) for the initiation of the reaction.

9. Heat treatment device according to claim 1, characterized in that the chemical filling consists of platinum black (12), which is brought into flow connection with the surrounding air by means of the open ends (2) for the initiation of the reaction.

10. Heat treatment device according to claim 1 to 9, characterized in that in flow direction behind the chemical filling (5, 7, 12, 13) there is located a catalyst filling connected at the outlet side (8, 14).

11. Heat treatment device according to claim 10, characterized in that the catalyst connected at the outlet side (8, 14) consists purely of activated carbon or cellulose.

12. Heat treatment device according to one of claims 3 to 5 or 10, characterized in that the catalyst (7, 8, 14) consists of an activated carbon carrier which is provided with a platinum/iridium impregnation.

13. Heat treatment device according to one of claims 1 to 12, characterized in that the container (1) is constructed as tube in which the fillings are arranged in layers.

14. Heat treatment device according to one of claims 1 to 13, characterized in that it is brought into active connection with a colorimetric test tube (9) as detection device.

15. Heat treatment device according to one of claims 1 to 13, characterized in that it is brought into active connection with a colorimetric tape instrument as detection device.

16. Heat treatment device according to claim 13, characterized in that the fillings are formed as series-connected layer for a test tube containing an indicator layer.

## Revendications

1. Dispositif de traitement thermique destiné à transformer des échantillons gazeux en constituants décelables par un dispositif d'indication, caractérisé en ce qu'un récipient (1, 15) traversé par le gaz à analyser, est pourvu d'un remplissage d'agents chimiques (5, 7, 8, 12, 14) susceptible d'une réaction exothermique et d'un dispositif de lancement (2, 4, 17) initiant la réaction.

2. Dispositif de traitement thermique selon la revendication 1, caractérisé en ce qu'il est prévu comme agents chimiques un remplissage de monoxyde de sodium (12) qui peut être mouillé avec de l'eau (17) pour amorcer la réaction.

3. Dispositif de traitement thermique selon la revendication 1, caractérisé en ce que le remplissage d'agents chimiques est constitué d'une substance facilement oxydable, volatile, appliquée sur un support (6) et d'un remplissage de catalyseur (7) placé en aval qui, pour amorcer la réaction, est amené en liaison par écoulement avec le support de substance.

4. Dispositif de traitement thermique selon la revendication 3, caractérisé en ce qu'on utilise comme support (6) du gel de silice imprégné de méthanol.

5. Dispositif de traitement thermique selon la revendication 4, caractérisé en ce que pour l'imprégnation il est prévu une ampoule (4) cassable, remplie de méthanol (5), en amont du support (6).

6. Dispositif de traitement thermique selon l'une des revendications 3 à 5, caractérisé en ce que le remplissage de catalyseur (7) est de la hopcalite.

7. Dispositif de traitement thermique selon l'une des revendications 1 à 6, caractérisé en ce qu'une partie du remplissage d'agents chimiques (7, 8, 13, 14) est constituée par un remplissage de collecte (13) absorbant le gaz d'essai.

8. Dispositif de traitement thermique selon la revendication 1, caractérisé en ce que le remplissage d'agents chimiques est constitué par un matériau pyrophore (12) qui est amené en liaison d'écoulement avec l'air ambiant, par les extrémités (2) ouvertes, pour amorcer la réaction.

9. Dispositif de traitement thermique selon la revendication 1, caractérisé en ce que le remplissage d'agents chimiques est de la mousse de platine (12) qui est amenée en liaison d'écoulement avec l'air ambiant, par les extrémités (2) ouvertes, pour amorcer la réaction.

10. Dispositif de traitement thermique selon les revendications 1 à 9, caractérisé en ce qu'un remplissage de catalyseur complémentaire (8, 14) est intercalé derrière le remplissage d'agents chimiques (5, 7, 12, 13), dans le sens de l'écoulement.

11. Dispositif de traitement thermique selon la revendication 10, caractérisé en ce que le catalyseur complémentaire (8, 14) est constitué de charbon actif pur ou de cellulose.

12. Dispositif de traitement thermique selon l'une des revendications 3 à 5 ou 10, caractérisé en ce que le catalyseur (7, 8, 14) est constitué par un support de charbon actif qui est pourvu d'une imprégnation de platine/iridium.

13. Dispositif de traitement thermique selon l'une des revendications 1 à 12, caractérisé en ce que le récipient (1) est constitué par un petit tube dans lequel les remplissages sont disposés en couches.

14. Dispositif de traitement thermique selon l'une des revendications 1 à 13, caractérisé en ce qu'il est amené en liaison active avec un tube à essais colorimétrique (9) pour servir de dispositif d'indication.

15. Dispositif de traitement thermique selon l'une des revendications 1 à 13, caractérisé en ce qu'il est amené en liaison active avec un appareil à bande colorimétrique servant de dispositif d'indication.

16. Dispositif de traitement thermique selon la revendication 13, caractérisé en ce que les remplissages constituent une pré-couche pour un tube à essais contenant une couche d'indication.

# Fig. 1

# Fig. 2